(19)

Europäisches Patentamt
European Patent Office
Office européen des brevets

(11)  **EP 4 718 334 A1**

(12)  **EUROPEAN PATENT APPLICATION**

(43) Date of publication:
    **01.04.2026 Bulletin 2026/14**

(21) Application number: **24202761.3**

(22) Date of filing: **26.09.2024**

(51) International Patent Classification (IPC):
    *G06N 3/094* (2023.01)    *G06N 20/20* (2019.01)

(52) Cooperative Patent Classification (CPC):
    **G06N 7/01; G06N 3/094; G06N 20/20**

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH MA MD TN**

(71) Applicant: **Siemens Healthineers AG**
    **91301 Forchheim (DE)**

(72) Inventors:
   • **Datar, Manasi**
    **400067 Mumbai (IN)**

   • **Teichmann, Marvin**
    **91054 Erlangen (DE)**
   • **Borsdorf, Anja**
    **91325 Adelsdorf (DE)**
   • **Ghesu, Florin-Cristian**
    **91083 Baiersdorf (DE)**
   • **Kratzke, Lisa**
    **91054 Erlangen (DE)**
   • **Vega, Fernando**
    **91056 Erlangen (DE)**

(74) Representative: **Siemens Healthineers**
    **Patent Attorneys**
    **Postfach 22 16 34**
    **80506 München (DE)**

(54) **A METHOD FOR ESTIMATING A POPULATION UNCERTAINTY DISTRIBUTION OF TRAINING DATA BY AN ELECTRONIC COMPUTING DEVICE, A COMPUTER PROGRAM PRODUCT, A COMPUTER-READABLE STORAGE MEDIUM, AS WELL AS AN ELECTRONIC COMPUTING DEVICE**

(57)    The invention relates to a method for estimating a population uncertainty distribution (12) of training data (14) by an electronic computing device (10), comprising the steps of: providing an artificial intelligence as an ensemble learner model (16) comprising at least two base learners (M1 - Mk) by the electronic computing device (10); providing the training data (14) for training the ensemble learner model (16) by the electronic computing device (10); separating the training data (14) into a first set (18) of training data (14) for training one of the at least two base learners (M1 - Mk) and into a second set (20) of training data (14) for validating another one of the at least two base learners (M1 - Mk) by the electronic computing device (10); training the at least one base learner (M1 - Mk) with the first set (18) of training data (14) by the electronic computing device (10); and estimating the population uncertainty distribution (12) by validating the other at least one base learner (M1 - Mk) with the second set (20) of training data (14) by the electronic computing device (10). Furthermore, the present invention relates to a computer program product, a computer-readable storage medium, as well as to an electronic computing device.

FIG 1

EP 4 718 334 A1

**Description**

The present invention relates to a method for estimating a population uncertainty distribution of training data by an electronic computing device according to the pending claim 1. Furthermore, the present invention relates to a corresponding computer program product, a corresponding computer-readable storage medium, as well as to a corresponding electronic computing device.

Out-of-distribution (OOD) images pose a challenge to deep learning (DL) based segmentation models. Since out of distribution images are highly different from the training data set distribution, deep learning-base segmentation methods typically produce inconsistent outputs. In the context of for example medical image analysis, examples of out of distribution inputs could include images with included artifacts, for example implants, guides/wires, markers, or furthermore. Such images may not be visually inspected before running the automated segmentation pipeline, leading to unpredictable behavior and posing a critical safety risk in the clinical workflow.

Therefore, there is a need to identify out of distribution instances and provide information about possible loss of accuracy while using automated segmentation pipelines. Most common deep learning-based segmentation methods are not designed to include out of distribution detection, therefore, an out of distribution detection method that requires minimal changes to the network architecture and can be applied post-training is required.

Existing approaches achieve an acceptable performance for out of distribution detection by using the difference between output logits or their scaled variants and the corresponding 1-hot encoding as a measure of disparity. Such methods seek to compare out of distribution inputs to plausible in-distribution (ID) examples from the training set. Explicit inclusion of an out layer/out of distribution detector during model training has been also observed in some approaches. These approaches require out of distribution examples as part of the training process, rendering them impractical. Statistical approaches including the use of the Mahalanobis-distance have been traditionally applied to network feature distribution for out of distribution detection, which often necessitates network architecture modification, such as flattening the final encoder layer or averaging encoder feature maps. These adaptions can lead to potential feature collapse.

It is an object of the present invention to provide a method, a corresponding computer program product, a corresponding computer-readable storage medium, as well as a corresponding electronic computing device, by which a population uncertainty distribution of training data can be estimated in an improved manner.

This object is solved by a method, a corresponding computer program product, a corresponding computer-readable storage medium, as well as a corresponding electronic computing device according to the independent claims. Advantageous embodiments are presented in the dependent claims.

One aspect of the invention relates to a method for estimating a population uncertainty distribution of training data by an electronic computing device. An artificial intelligence as an ensemble learner model comprising at least two base learners is provided by the electronic computing device. The training data is provided for training the ensemble learner model by the electronic computing device. The training data is separated into a first set of training data for training one of the at least two base learners and into a second set of training data for validating another one of the at least two base learners by the electronic computing device. The at least one base learner is trained with the first set of training data by the electronic computing device and the population uncertainty distribution is estimated by validating the other at least one base learner with the second set of training data by the electronic computing device.

Ensemble learning methods are empirically known to improve accuracy and reduce generalization error for image segmentation tasks. Recently, sampling-based Bayesian ensemble method such as Monte Carlo dropout or deep ensembles have shown improved performance on image segmentation tasks. These methods provide multiple outputs for each evaluated sample, allowing for an estimation of model uncertainty. This invention proposes a statistical method to estimate the similarity of a test sample to a distribution of uncertainty over the complete training set and further determination of out of distribution samples based on a threshold.

In particular, model ensembles are generally created by varying the choice of training data for base learners within the ensemble. For example, bootstrap aggregation or bagging is an approach where the training data set is sampled with replacement to create a subset to train base learners. The invention proposes the use of residual bootstraps subset as the validation set for the base learner. Conversely, each training sample can be a part of the validation set for some base learners and the corresponding uncertainty map can be computed. For example, a variation of bootstrap aggregation is used, where each training sample is only exposed to half of the base learners during the training, minimizing the overlap between subset to increase diversity of the ensemble. The uncertainty map computation can be easily adapted to such variation, where each training sample can be a part of the validation set for the base learners. Further, this computation lends itself equally to deterministic learning models trained using bootstrap aggregation since it works directly with the network outputs and is applied post training.

Therefore, the method provides a way of using the complete training data set to compute a conservative estimation of the population uncertainty distribution. This computation is based on the predicted uncertainty of training data only and does not require the explicit presence of out of distribution samples for threshold selection. The method allows for a direct estimation of similarity of a test sample to the training distribution in the uncertainty space, independent of the network architecture or feature dimensionality. It can therefore be easily integrated into existing pipelines and used with pre-trained models trained using the bootstrap aggregate ensemble strategy. Contrary to previous approaches, the method proposed applies for example the Mahalanobis distance to uncertainty scores derived from class-conditional distributions, offering a method that circumvents the need for architectural changes and reduces the risk of feature collapse. The method can be extended for using applications beyond out of distribution detection with a metric chosen to be appropriate for the task at hand.

Along with uncertainty, accuracy can also be evaluated over the entire training data set using the proposed method. Statistical curves such as the receive operating characteristic, precision-recall, or accuracy-versus- uncertainty curves can then be used to select an operating point or threshold to characterize the performance on the test samples. The proposed method offers the advantage that the performance curves approximate population performance better, as compared to a smaller, separate validation set that is typically used.

An ensemble learner model, which also may be regarded as the so called ensemble model, is a machine learning technique that trains multiple base models and combines their predictions to produce more accurate results than could be achieved with a single model alone. The basic idea behind ensemble methods is to leverage the strength of multiple algorithms or models, rather than relying on a single one. There are different ensemble models, for example the so-called bagging or bootstrap aggregation. This method trains multiple base models in parallel, with each model trained on a random subset of data. The final prediction is made by averaging the predictions from all the individual models. An examples of bagging algorithms include random forest. Furthermore, boosting is also a method that trains base models sequentially, with each subsequent model focusing on the errors or misclassifications made by the previous models. The final prediction is made by combining the predictions from all the individual models. Example of boosting algorithms include gradient boosting machines. Furthermore, the stacking method trains multiple base models in parallel, then uses a separate meta-model to combine their predictions. The meta-model can be any type of model that takes the individual predictions as inputs and produces a final prediction. Examples of stacking algorithms including stack generalization and blending. Ensembles most are often used in machine learning competitions and real-word applications, because they trend to produce more accurate results than single models, especially when dealing with complex or noisy data.

According to an embodiment, the training data is separated by using a bootstrap aggregation algorithm. The bootstrap aggregation is a machine learning ensemble technique that involves training models and base models in parallel and different random subset of the data, then averaging their prediction to produce a final output. This approach helps reduce overfitting and improve model performance by leveraging the diversity of the models. The basic idea behind bootstrap aggregation is to create multiple bootstrap samples from the original training data by randomly sampling with replacement. Each bootstrap sample is then used to train a base model, resulting in an ensemble of models that are diverse and can capture different patterns in the data. The final prediction is made by averaging the predictions from all the individual models. Bootstrap aggregation has several advantages over single-model approaches. For example, an improved accuracy is provided by combining multiple models, wherein bootstrap aggregation can reduce the variance of predictions and improve the overall accuracy. Furthermore, the use of random subsets of the data can help prevent overfitting and improve generalization of performance. The diversity of the ensemble can help reduce the impact of noisy or out lower observations in the training data. Bootstrap aggregation can be applied to a wide range of machine learning algorithms, including decision trees, neural networks and support vector machines. The bootstrap aggregation is also known as the so-called bagging and is commonly used in machine learning application such as random forest and back trees.

In another embodiment, the training is performed for the half of the provided base learners. For example, the base learners may be provided with the abbreviation "k". The bootstrap aggregation or bagging is the approach where the training data set N is sampled with a replacement k times to create a subset of $N_K$ to train base learners. According to the embodiment, the use of residual bootstrap subset $(N - N_K)$ as the validation set for the $k^{th}$ base learner. Conversely, each training sample $(x_i)$ can be a part of the validation set for a maximum of (k-1) base learners and the corresponding uncertainty map can be computed. A variation of bootstrap aggregation is used for each training sample and may be for example exposed to half the base learners during training, minimizing the overlap between subset to increase diversity of the ensemble. The uncertainty map computation can easily be adapted to such a variation, where each training sample can be a part of the validation set for a maximum of (k/2) base learners.

According to another embodiment for validating the at least one base learner the training data is perturbed in a pre-processing step. For example, in the case of a single model trained using a static training data set, this computation can be applied by a perturbation of training samples during evaluation. Each training sample $(x_i)$, can be perturbed k times to create unseen variants of the original training sample to constitute the corresponding validation subset. Such a validation subset can be evaluated using the trained model to obtain the uncertainty map. It is therefore possible to compute a conservative estimate of the underlying population uncertainty distribution by iteratively computing the uncertainty map for every training sample.

In another embodiment, depending on the estimated population uncertainty distribution an uncertainty score for the training data is determined. For example, a voxel level uncertainty map can be post-processed to obtain the uncertainty

score $u_i$, as already mentioned. Note that the uncertainty score can be aggregated to the organ level with dimensionality M in the case of multi-organ segmentation with M distinct organs.

According to another embodiment, a plurality of training data is provided and the artificial intelligence is trained and validated with the plurality of training data. Therefore, the plurality of training data samples can be provided. Therefore, the artificial intelligence can be trained and validated in an improved manner by using the plurality of training data.

In another embodiment, an uncertainty score for the artificial intelligence is determined depending on an aggregation of a plurality of uncertainty scores of each training data. For example, to approximate the uncertainty score of the distribution for the ID-population a M class-conditional Gaussian distribution $\mathcal{N}$ ($\mu_m$, $\Sigma$), m $\in$ [1, M] over the uncertainty score of the training data computed for every single training sample is provided. For example:

$$\mu_m = \frac{1}{N_m} \sum_i u_{i,m}$$

represents the class-wise means, and

$$\Sigma = \frac{1}{N} \sum_{m=1}^{M} \sum_i \left(u_{i,m} - \mu_m\right)\left(u_{i,m} - \mu_m\right)^T$$

, is the covariance matrix capturing shared uncertainties across classes.

In another embodiment, a Gaussian distribution is used for determining the uncertainty score for the artificial intelligence. The Gaussian distribution, also known as the normal distribution or bell curve, is a continuous probability distribution that describes data that clusters around a mean value with characteristics well shaped. It is one of the most widely used distributions in statistics and machine learning, and it has many applications in fields for example physics, biology and engineering. The Gaussian distribution is characterized by two parameters: The mean and standard deviation. The mean represents the center of the distribution, while a standard deviation measures the spread of dispersion of the data around the mean. The Gaussian distribution is often used as a model for real-world data, particularly when the data are continuous and have an uni model distribution. It can be used to estimate probabilities, make prediction and test hypothesis about the data.

According to another embodiment, test data are provided for the trained artificial intelligence and an affiliation of the test data to the distribution of the training data is determined depending on a difference threshold between the test data and the training data. Therefore, the test data can be evaluated, if they are inside of the distribution or outside of the distribution. For example, when the test data are outside of the distribution, they can be identified as the so-called out of distribution samples. Therefore, without using or without the knowledge of such out of distribution samples, the out of distribution samples can be identified in an improved manner.

In another embodiment, a Mahalanobis distance is used for determining the difference between the test data and the training data. In particular, for each sample with a class-wise uncertainty score vector set $z_i$ the Mahalanobis distance to the above distribution is given:

$$\mathcal{DM}\left(z_i, \mathcal{N}(\mu_m, \Sigma)\right) = \sqrt{\sum_{m=1}^{M} \left(z_{i,m} - \mu_m\right)^T \Sigma^{-1}\left(z_{i,m} - \mu_m\right)}$$

and can be used as a metric. Then, for example, one of the following methods of threshold selection may be utilized based on the specific use case. The Mahalanobis distance follows a Chi square-distribution with degrees of freedom equal to the number of features (M: number of foreground classes in this formulation), allowing for the computation of the critical value for the out of distribution detection at an application-specific significance level without necessitating out of distribution test samples. A Mahalanobis distance value covering a critical, application-specific percentage of the cumulative Mahalanobis distance curve can be used as a threshold to distinguish out of distribution test samples. Furthermore, an operating point may be selected using the class-wise performance curves based on a trade-off between accuracy and uncertainty. The Mahalanobis distance corresponding to the selected uncertainty score can be used as a threshold. Therefore, only the training data is required for the threshold estimation, no out of distribution or control samples are utilized. Also, performance based analysis can be extended further for calibration of the network based on uncertainty.

According to another embodiment, if the difference exceeds the threshold a warning message is generated. For example, the process of out of distribution detection is a test using test data. The Mahalanobis distance between the test samples and the distribution is computed and compared to the application specific threshold selected using one of the methods above. The test sample is detected as out of distribution, if the Mahalanobis distance is greater than the threshold. Therefore, the out of distribution detection can be provided in an improved manner.

In another embodiment, the artificial intelligence is used for a magnetic resonance only planning and/or a radiation therapy planning and/or a radio therapy dosed prediction.

The magnetic resonance only (MRO) planning is a technique used in radiation therapy for cancer treatment. MRO planning involves using magnetic resonance imaging (MRI) scans to create detailed images of the tumor and surrounding issues, and then using these images to plan the delivery of radiation therapy. In traditional radiation therapy planning, computed tomography (CT) scans are used to generate 3D images of the tumor and normal structures, which are then used to calculate the dose distribution delivered by the radiation beams. However, CT scans have limitation in terms of soft tissue contrast and resolution, making it difficult to accurately visualize of some types of tumors or distinguish them from surrounding tissues. MRO planning overcomes these limitations by using MRI scans instead of CT scans. MRI scans provide superior soft tissue contrast and resolution, allowing for more accurate delineation of the tumor and normal structures. This improved visualization can lead to more precise radiation therapy planning and delivery, potentially improving treatment outcomes and reducing side effects. MRO planning is particularly useful in treating tumors located in areas with complex anatomy, such as the brain or pelvis, where accurate targeting of the tumor is critical for minimizing damage to surrounding normal tissues.

Radiation therapy planning, also known as radio therapy treatment planning, is the process of designing a course of radiation therapy treatment for cancer patients. The goal of radiation therapy planning is to determine the optimal dose and configuration of radiation beams that will deliver the decided amount of radiation to the tumor while minimizing exposure to surrounding healthy tissues. The radiation therapy planning process typically involves the steps of imaging, target deviation, planning, quality assurance and treatment delivery. Radiation therapy planning is a complex process that requires careful consideration of many factors, including the size of the location of the tumor, the patients' anatomy and health status and the potential risks and benefits of the treatment. The goal of radiation therapy planning is to deliver the maximum possible dose to the tumor while minimizing exposure to surrounding healthy tissues, with the aim of improving treatment outcomes and reducing side effects.

Radio therapy dose prediction is the process of estimating the amount of radiation dose that will be delivered to a specific target volume or organ during radiation therapy treatment. This process involves using mathematical models, machine-learning algorithms or other computation methods to predict the dose distribution based on patient-specific data such as imaging scans, treatment plans, and clinical factors. Accurate dose prediction is important for example the treatment planning, the treatment verification also the patient monitoring. Over all, radiotherapy dose prediction is a complex process that requires careful consideration of many factors, including the accuracy and reliability of the prediction method, the quality and availability of patient-specific data, and the potential risks and benefits of treatment.

Therefore, the MR-only and RT planning system is facilitated by the artificial intelligence powered MR-based synthetic CT generation for convenient dosimetric planning. It is important to verify that the synthetic CT images generated by the artificial intelligence model are clinically viable for the RT planning. This is possible using voxel-wise uncertainty maps obtained using the methods described above. The proposed method further allows the computation of the uncertainty distribution of the complete training data set. The uncertainty map for a given test sample can be compared to the distribution using a standardized metric such as a z-score to highlight regions in the synthetic CT output with possible deviation from clinical viability.

AI powered radiation dose prediction for RT planning can be treated as a voxel-wise regression problem similar to the MR-only RT planning problems stated above. Therefore, the analyzation method based on standardized z-scores may also be applied here. Furthermore, scaling of the uncertainty maps proportional to the volume of the regions of interest (ROI) to improve the estimated bounds of the uncertainty and make the measure more interpretable is provided. The scaling factor is computed by aggregating the ratio of error in dose prediction to the raw uncertainty over voxels within the selected ROI, across all images in the validation data set and is sensitive to the composition and size of the validation data set. The proposed method allows the computation of such measures over the complete training data set, thereby better reflecting the population measure and mitigating the issues related to the composition of the validation data set.

In particular, the proposed method is a computer-implemented method. Therefore, another aspect of the invention relates to a computer program product comprising program code means for performing a method according to the proceeding aspect.

Furthermore, the present invention relates to a computer-readable storage medium comprising at least the computer program product according to the proceeding aspect.

A still further aspect of the invention relates to an electronic computing device for estimating a population uncertainty distribution of training data, wherein the electronic computing device is configured for performing a method according to the proceeding aspect. In particular, the method is performed by the electronic computing device.

Advantageous embodiments of the methods are to be regarded as advantageous embodiments of the computer program product, the computer-readable storage medium, as well as the electronic computing device. The electronic computing device therefore comprises means for performing the method.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Independent of the grammatical term usage, individuals with male, female or other gender identities are included within the term.

Further features and feature combinations of the invention are obtained from the figure and their description as well as the claims. In particular, further implementations of the invention may not necessarily contain all features of one of the claims. Further implementations of the invention may comprise features or combinations of features, which are not recited in the claims.

The figures show in:

Fig. 1    shows a schematic block diagram according to an embodiment of an electronic computing device;

Fig. 2    a schematic block diagram according to an embodiment of a method;

Fig. 3    another schematic block diagram according to an embodiment of a method; and

Fig. 4    another schematic block diagram according to an embodiment of the method.

In the figures the same elements are provided with the same reference signs.

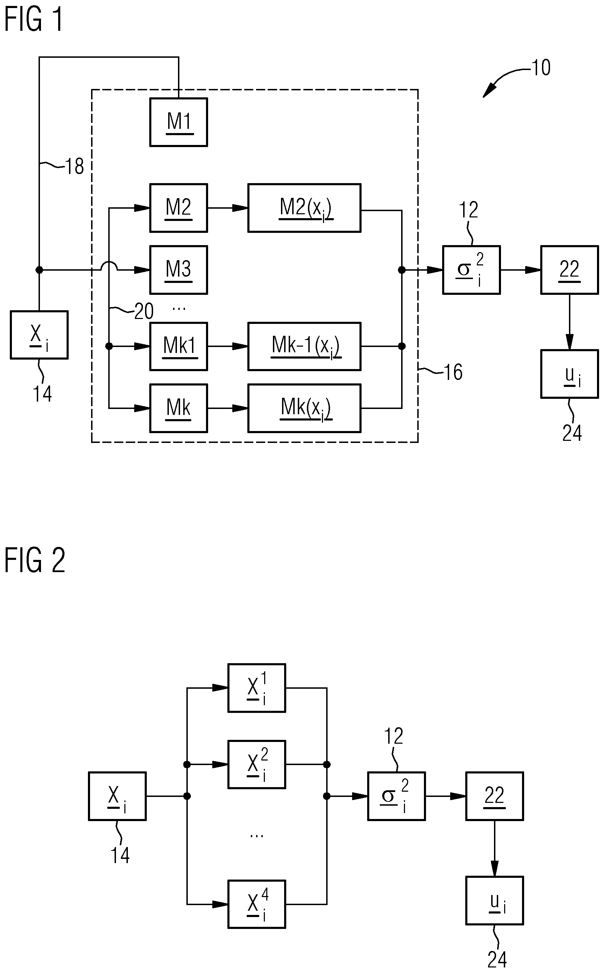

Fig. 1 shows a schematic block diagram according to an embodiment of an electronic computing device 10 for performing a method according to the invention. In particular, the electronic computing device 10 is configured for estimating a population uncertainty distribution 12 of training data 14.

According to the embodiment, an artificial intelligence as an ensemble learner model 16 is provided, wherein the ensemble learner model 16 comprises at least two base learner M1 - Mk. The training data 14 is provided for training the ensemble learner model 16. The training data 14 is separated into a first set 18 of training data 14 for training one of the at least two base learners M1 - Mk and into a second set 20 of training data 14 for validating another one of the at least two base learners M1 - Mk. The at least one base learner M1 - Mk is trained with the first set of training data 18 and the population uncertainty distribution 12 is estimated by validating the other at least one base learner M1 - Mk with the second set of training data 20 by the electronic computing device. As shown in Fig. 1 a first base learner M1 as well as a third base learner M3 is trained with the first set 18. A second base learner M2, a base learner Mk-1 as well as a base learner Mk is validated with the second set 20. Furthermore, a post-processing step 22 as well as an uncertainty score 24 is shown.

In particular, the training data 14 is separated by using a bootstrap aggregation algorithm. Furthermore, the training is performed for the half of the provided base learners M1 - Mk. Furthermore, for validating the at least one base learner M1 - Mk the training data 14 is perturbed in a pre-processing step, which is particularly shown in Fig. 2.

Depending on the estimated population uncertainty distribution 12, as already mentioned, an uncertainty score 24 for the training data 14 is determined. Furthermore, a plurality of training data 14 is provided and the artificial intelligence is trained and validated with a plurality of training data. Furthermore, an uncertainty score for the artificial intelligence is determined depending on an aggregation of the plurality of uncertainty scores 24 of each training data 14.

Furthermore, a Gaussian distribution is used for determining the uncertainty score for the artificial intelligence.

Model ensembles are generally created by varying the choice of training data for k base learners ($M_i$, $i \in [1, k]$) within the ensemble. Bootstrap aggregation or bagging is an approach where the training dataset N is sampled with replacement k times to create subsets $N_k$ to train base learners M1 - Mk. This invention proposes the use of residual bootstrapped subset (N - $N_k$) as the validation set for the $k^{th}$ base learner M1 - Mk. Conversely, each training sample ($x_i$) can be a part of the validation set for a maximum of (Zc - 1) base learners M1 - Mk and the corresponding uncertainty map ($\sigma_i^2$) can be computed. An example of this computation is shown in Figure 1. A variation of bootstrapped aggregation may be used, where each training sample, which may be the training data 14, is only exposed to half the base learners M1 - Mk during training, minimizing the overlap between subsets to increase diversity of the ensemble. The uncertainty map computation can be easily adapted to such a variation, where each training sample can be a part of the validation set for a maximum of (/c/2) base learners M1 - Mk.

Further, this computation lends itself equally to deterministic learning models trained using bootstrapped aggregation since it works directly with the network outputs and is applied post-training.

Fig. 2 shows another schematic block diagram according to the embodiment of the invention. In the case of a single model (M) trained using a static training dataset, this computation can be applied via perturbation of training samples during evaluation. Each training sample ($x_i$) can be perturbed k times to create unseen variants of the original training sample to constitute the corresponding validation subset. Such a validation subset can be evaluated using the trained model to obtain the uncertainty map ($\sigma_i^2$) as shown in Figure 2. It is therefore possible to compute a conservative estimate of the underlying population (ID) uncertainty distribution 12 by iteratively computing the uncertainty map for every training sample.

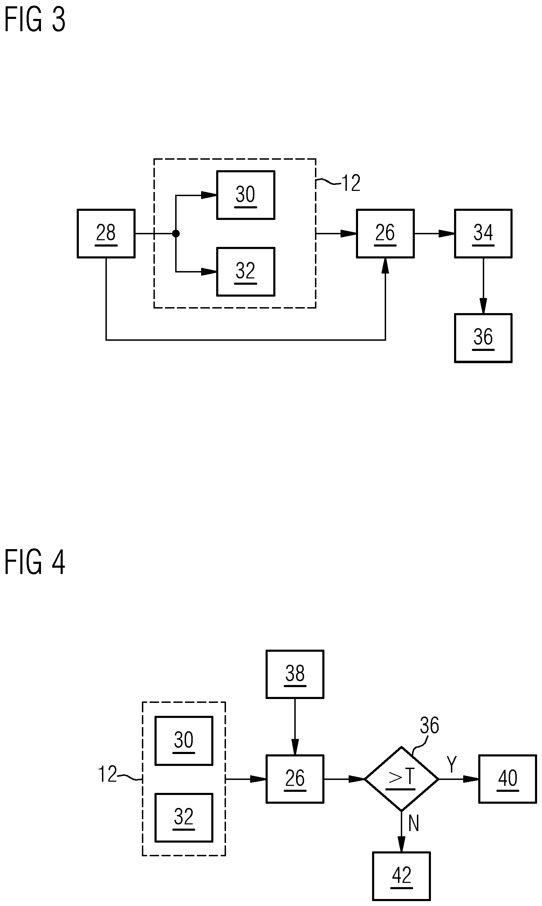

Fig. 3 shows another block diagram according to a method of the invention. In particular, Fig. 3 shows an example for statistical threshold selection based on the cumulative Mahalanobis distance 26. Therefore, Fig. 3 shows a so-called organ level uncertainty score for N which is shown with the reference sign 28. Furthermore, the uncertainty distribution 12 is shown. The uncertainty distribution 12 comprises for example class-wise means 30 as well as a shared covariance 32. Furthermore, the cumulative distribution 34 as well as a statistical threshold 36 is shown.

A voxel level uncertainty map ($\sigma_i^2$) can post-processed to obtain an uncertainty score 24 $u_i$, as shown in Figures 1 and 2. Note that the uncertainty score 24 can be aggregated at the organ level with dimensionality $M$ in the case of multi-organ segmentation with $M$ distinct organs.

This invention proposes to approximate the uncertainty score distribution for the ID population by estimating $M$ class-conditional Gaussian distributions $\mathcal{N}(\mu_m, \Sigma)$, m $\in$ [1, M] over uncertainty scores $u_i$ computed for every training sample as explained above. Here, $\mu_m = \frac{1}{N_m}\sum_i u_{i,m}$ represents the class-wise means, and $\Sigma = \frac{1}{N}\sum_{m=1}^{M}\sum_i (u_{i,m} - \mu_m)(u_{i,m} - \mu_m)^T$ is the covariance matrix, capturing shared uncertainties across classes.

For each input sample with a class-wise uncertainty score vector $z_i$ the Mahalanobis distance to the above distribution $\mathcal{N}(\mu_m, \Sigma)$ is given as $\mathcal{DM}(z_i, \mathcal{N}(\mu_m, \Sigma)) = \sqrt{\sum_{m=1}^{M}(z_{i,m} - \mu_m)^T \Sigma^{-1}(z_{i,m} - \mu_m)}$ and can be used as a metric.

One of the following methods of threshold selection may be utilized, based on the specific use case: The Mahalanobis distance ($\mathcal{DM}$) follows a $\chi^2$-distribution with degrees of freedom equal to the number of features (M: number of foreground classes in this formulation), allowing for the computation of a critical value for OOD detection at an application-specific significance level without necessitating OOD or ID test samples. A Mahalanobis distance value covering a critical, application-specific percentage of the cumulative $\mathcal{DM}$ curve can be used as a threshold to distinguish OOD test samples. This method is depicted in the flow chart in Figure 3. An operating point may be selected using class-wise performance curves based on a trade-off between accuracy and uncertainty. The $\mathcal{DM}$ corresponding to the selected uncertainty score can be used as a threshold.

Note that only the training set is required for the threshold estimation, no OOD or control samples are utilized. Also, performance-based analysis can be extended further for calibration of the network based on uncertainty.

Fig. 4 shows another schematic block diagram according to an embodiment of the invention. In particular, Fig. 4 shows a method and an example of the out of distribution detection using the Mahalanobis distance 26 from the population uncertainty distribution 12. Therefore, Fig. 4 further shows the origin level uncertainty score for the test sample which is shown with the reference sign 38. Furthermore, if the Mahalanobis distance 26 is higher than the threshold 36 the test sample may be out of distribution, which is shown with the reference sign 40. Otherwise, if the Mahalanobis distance 26 does not exceed the threshold 36 the test sample may be inside of the population distribution, which is shown with the reference sign 42.

The process of OOD detection in the test set is shown in Figure 4. The Mahalanobis distance 26 ($\mathcal{DM}$) between the test sample and ID distribution is computed and compared to the application-specific threshold selected using one of the methods above. The test sample is detected as OOD if $\mathcal{DM} > T$. The method has the capability to discriminate between ID (control) and OOD (implant, brachy) examples for an experimental use case.

The method in this invention provides a novel way of using the complete training dataset to compute a conservative estimate of the population (ID) uncertainty distribution 12. This computation is based on predicted uncertainty of the training data (ID) only and does not require the explicit presence of OOD samples for threshold selection. The method in this invention allows for a direct estimation of similarity of a test sample to the training (ID) distribution in the uncertainty space, independent of the network architecture or feature dimensionality. It can therefore be easily integrated into existing pipelines and used with pre-trained models trained using the bootstrap aggregate ensemble strategy.

Contrary to previous approaches, the method proposed in this invention applies the Mahalanobis distance 26 to uncertainty scores 24 derived from class-conditional distributions, offering a novel method that circumvents the need for architectural changes and reduces the risk of feature collapse.

The method can be extended for use in applications beyond OOD detection with a metric chosen to be appropriate for the task at hand. Some examples are listed below.

Along with uncertainty, accuracy can also be evaluated over the entire training dataset using the proposed method. Statistical curves such as the Receiver operating characteristic (ROC), precision-recall (PR), or accuracy-vs-uncertainty (AvU) curves can then be used to select an operating point or threshold to characterize the performance on the test samples. The proposed method offers the advantage that the performance curves approximate population performance better, as compared to a smaller, separate validation set that is typically used.

Magnetic resonance (MR)-only radiation therapy (RT) planning: An MR-only RT planning system is facilitated by AI powered MR-based Synthetic CT (syn-CT) generation for convenient dosimetric planning. It is important to verify that the syn-CT images generated by the AI model are clinically viable for RT planning. This is possible using voxel-wise uncertainty maps obtained using the methods described in Figure 1 or Figure 2. The proposed method further allows the computation of the population uncertainty distribution 12 over the complete training dataset. The uncertainty map for a given test sample can be compared to this distribution using a standardized metric such as a z-score to highlight regions in the syn-CT output with possible deviation from clinical viability.

Radiotherapy dose prediction: AI powered radiation dose prediction for RT planning can be treated as a voxel-wise regression problem similar to the MR-only RT planning problem stated above. Therefore, the evaluation method based on standardized z-scores may also be applied here. Apart from this, scaling of the uncertainty maps proportional to the volume of individual regions of interest (ROI) to improve the estimated bounds of the uncertainty and make the measure more interpretable may be provided. The scaling factor is computed by aggregating the ratio of error in dose prediction to the raw uncertainty over voxels within the selected ROI, across all images in the validation dataset and is sensitive to the composition and size of the validation dataset. The proposed method allows the computation of such measures over the complete training dataset, thereby better reflecting the population measure and mitigating the issues related to the composition of the validation dataset.

**Claims**

1. A method for estimating a population uncertainty distribution (12) of training data (14) by an electronic computing device (10), comprising the steps of:

   - providing an artificial intelligence as an ensemble learner model (16) comprising at least two base learners ($M_1$ - $M_k$) by the electronic computing device (10);
   - providing the training data (14) for training the ensemble learner model (16) by the electronic computing device (10);
   - separating the training data (14) into a first set (18) of training data (14) for training one of the at least two base learners ($M_1$ - $M_k$) and into a second set (20) of training data (14) for validating another one of the at least two base learners ($M_1$ - $M_k$) by the electronic computing device (10);
   - training the at least one base learner ($M_1$ - $M_k$) with the first set (18) of training data (14) by the electronic computing device (10); and
   - estimating the population uncertainty distribution (12) by validating the other at least one base learner ($M_1$ - $M_k$) with the second set (20) of training data (14) by the electronic computing device (10).

2. The method according to claim 1, wherein

the training data (14) is separated by using a bootstrap aggregation algorithm.

3. The method according to claim 1 or 2, wherein
the training is performed for the half of the provided base learners ($M_1$ - $M_k$).

4. The method according to any one of claims 1 to 3, wherein
for validating the at least one base learner ($M_1$ - $M_k$) the training data (14) is perturbed in a preprocessing step.

5. The method according to any one of claims 1 to 4, wherein
depending on the estimated population uncertainty distribution (12) an uncertainty score (24) for the training data (14) is determined.

6. The method according to any one of claims 1 to 5, wherein
a plurality of training data (14) is provided and the artificial intelligence is trained and validated with the plurality of training data (14).

7. The method according to claims 5 and 6, wherein
an uncertainty score for the artificial intelligence is determined depending on an aggregation of a plurality of uncertainty scores (24) of each training data (14).

8. The method according to claim 7, wherein
a Gaussian distribution is used for determining the uncertainty score for the artificial intelligence.

9. The method according to any one of claims 1 to 8, wherein
test data are provided for the trained artificial intelligence and an affiliation of the test data to the distribution of the training data (14) is determined depending on a difference threshold (36) between the test data and the training data (14).

10. The method according to any one of claims 1 to 9, wherein
a Mahalanobis distance (26) is used for determining the difference between the test data and the training data (14).

11. The method according to claim 9 or 10, wherein
if the difference exceeds the threshold (36) a warning message is generated.

12. The method according to any one of claims 1 to 11, wherein
the artificial intelligence is used for a magnetic resonance only planning and/or a radiation therapy planning and/or a radiotherapy dose prediction.

13. A computer program product comprising program code means for performing a method according to any one of claims 1 to 12.

14. A computer-readable storage medium comprising the computer program product according to claim 13.

15. An electronic computing device (10) for estimating a population uncertainty distribution (12) of training data (14), wherein the electronic computing device (10) is configured for performing a method according to any one of claims 1 to 12.

# FIG 1

# FIG 2

## FIG 3

## FIG 4

Europäisches
Patentamt

European
Patent Office

Office européen
des brevets

# EUROPEAN SEARCH REPORT

**Application Number**

EP 24 20 2761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTHEW NG ET AL: "Estimating Uncertainty in Neural Networks for Cardiac MRI Segmentation: A Benchmark Study", ARXIV.ORG, CORNELL UNIVERSITY LIBRARY, 201 OLIN LIBRARY CORNELL UNIVERSITY ITHACA, NY 14853, 30 December 2022 (2022-12-30), XP091404493, DOI: 10.1109/TBME.2022.3232730 * pages 1-9 * | 1-15 | INV. G06N3/094 G06N20/20 |
| A | JAIN SIDDHARTHA ET AL: "Maximizing Overall Diversity for Improved Uncertainty Estimates in Deep Ensembles", PROCEEDINGS OF THE AAAI CONFERENCE ON ARTIFICIAL INTELLIGENCE, vol. 34, no. 04, 3 April 2020 (2020-04-03) , pages 4264-4271, XP093040533, ISSN: 2159-5399, DOI: 10.1609/aaai.v34i04.5849 * page 4264 - page 4270 * | 1-15 | |
| A | MOLOUD ABDAR ET AL: "A Review of Uncertainty Quantification in Deep Learning: Techniques, Applications and Challenges", ARXIV.ORG, CORNELL UNIVERSITY LIBRARY, 201 OLIN LIBRARY CORNELL UNIVERSITY ITHACA, NY 14853, 6 January 2021 (2021-01-06), XP081924266, DOI: 10.1016/J.INFFUS.2021.05.008 * the whole document * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 13 February 2025 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

**EUROPEAN SEARCH REPORT**

Application Number

EP 24 20 2761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUST JULIA ET AL: "GIT: Detecting Uncertainty, Out-Of-Distribution and Adversarial Samples using Gradients and Invariance Transformations", 2023 INTERNATIONAL JOINT CONFERENCE ON NEURAL NETWORKS (IJCNN), IEEE, 18 June 2023 (2023-06-18), pages 1-10, XP034387052, DOI: 10.1109/IJCNN54540.2023.10191233 [retrieved on 2023-08-02] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 13 February 2025 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)